# EUROPÄISCHE PATENTSCHRIFT

(11) **EP 1 245 785 B1**
(45) Veröffentlichungstag und Bekanntmachung des Hinweises auf die Patenterteilung: **01.06.2005**
(21) Anmeldenummer: 01107385.5
(22) Anmeldetag: 26.03.2001
(51) Int. Cl.: F01D 5/18, B23P 15/02

(54) **Verfahren zur Herstellung einer Turbinenschaufel**
Turbine airfoil manufacturing method
Méthode de fabrication d' une aube de turbine

(43) Veröffentlichungstag der Anmeldung: 02.10.2002
(73) Patentinhaber: SIEMENS AKTIENGESELLSCHAFT, 80333 München (DE)
(72) Erfinder: Tiemann, Peter, 58452 Witten (DE)

(56) Entgegenhaltungen:
- EP-A- 0 978 634
- DE-A- 19 963 349
- US-A- 5 243 759

## Beschreibung

Die vorliegende Erfindung betrifft ein Verfahren zur Herstellung einer Turbinenschaufel, insbesondere für eine Gasturbine, die mindestens eine mit einem Kühlmedium beaufschlagbare Kammer sowie an einer Hinterkante einen von zwei Wänden begrenzten Spalt zum Austreten des Kühlmediums aufweist.

Eine derartige Turbinenschaufel sowie ein Verfahren zu ihrer Herstellung sind beispielsweise aus der US 5,419,039 sowie der WO 99/59748 bekannt. Die Turbinenschaufeln werden im allgemeinen in einem Gußverfahren hergestellt. Hierfür werden in vielen Fällen einer oder mehrere Kerne aus einem keramischen Material hergestellt, die in ein Wachswerkzeug eingebettet werden. Nach dem Vergießen mit dem gewünschten Material für die Turbinenschaufel werden der oder die Kerne entfernt, insbesondere ausgelaugt. Aufgrund von Schrumpfungsfaktoren der Kerne, des Wachses, einer äußeren Kernschale und des für die Turbinenschaufel verwendeten Materials lassen sich keine besonders hohen Genauigkeiten für den Spalt an der Hinterkante erreichen.

Dieser Spalt ist allerdings maßgeblich für die Beaufschlagung der Turbinenschaufel mit dem Kühlmedium. Falls der Querschnitt des Spalts zu gering ist, wird der Durchfluß des Kühlmediums zu klein, so daß die Turbinenschaufel nicht mehr ausreichend gekühlt wird. Beim Einsatz unter hohen Temperaturen besteht dann die Gefahr des Versagens der Turbinenschaufel.

Damit der Spalt unter Berücksichtigung sämtlicher Einflußfaktoren noch den erforderlichen minimalen Querschnitt aufweist, muß daher eine relativ hohe Toleranz zugrunde gelegt werden. Dies führt dazu, daß eine Vielzahl der hergestellten Turbinenschaufeln einen größeren als den minimal zulässigen Spaltquerschnitt aufweist. Diese Turbinenschaufeln weisen entsprechend auch einen höheren Durchfluß des Kühlmediums auf und werden damit unnötig stark gekühlt. Dies führt zu einer Verschlechterung des Wirkungsgrades, da das Kühlmedium in vielen Fällen bei relativ hohem Druck einem Verdichter entnommen werden muß, der von der Turbine angetrieben wird.

Ferner ist aus der US 5,243,759 ein Verfahren zum Herstellen einer Gasturbinenschaufel bekannt, bei dem nach dem Guss der Turbinenschaufel Kühlluftöffnungen an der Hinterkante der Turbinenschaufel bearbeitet werden. Hierzu sind jeweils zwischen den beiden Seitenwänden zueinander beabstandete Rippen vorgesehen, zwischen denen ein Spalt gebildet ist. Beispielsweise durch Bohren können die Rippen in ihrer Gestalt verändert werden, wodurch der zwischen ihnen liegende Spalt zum Einstellen des Durchflusses bedarfsgerecht angepasst werden kann.

Aufgabe der vorliegenden Erfindung ist es daher, ein alternatives sowie einfaches Verfahren zum Herstellen einer Turbinenschaufel bereitzustellen, welches zu einer Turbinenschaufel mit einem minimierten Verbrauch an Kühlmedium führt.

Erfindungsgemäß wird diese Aufgabe dadurch gelöst, daß die Hinterkante der Turbinenschaufel zur Veränderung einer Länge mindestens einer der beiden winklig zueinander angeordneten Wände nachbearbeitet wird, um den Querschnitt des Spalts zu verändern.

Im Unterschied zu den bekannten Herstellungsverfahren wird eine gezielte Veränderung des Querschnitts des Spalts dadurch erzielt, daß die Länge mindestens einer der den Spalt begrenzenden und zueinander winklig verlaufenden Wände verändert wird. Es ergibt sich entsprechend eine Änderung des Querschnitts des Spaltes, so daß der Durchfluß des Kühlmediums durch den Spalt variiert werden kann.

Erfindungsgemäß können nunmehr somit Turbinenschaufeln mit einem für die Herstellung günstigen Querschnitt des Spalts vorgesehen werden. Die Anpassung dieses Querschnitts an die jeweils herrschenden Randbedingungen erfolgt durch eine Nachbearbeitung der den Spalt begrenzenden Wände zur Optimierung des Durchflusses des Kühlmediums.

Bei der erfindungsgemäßen Schaufel ist der Querschnitt des Spalts vorteilhaft durch eine Veränderung der Länge mindestens einer der Wände veränderbar.

Vorteilhafte Ausgestaltungen und Weiterbildungen der Erfindung gehen aus den abhängigen Ansprüchen hervor.

Es kann insbesondere die druckseitige Wand nachbearbeitet werden. Die Bearbeitung erfolgt gemäß einer vorteilhaften Ausgestaltung in einem Erodierverfahren. Die Länge der Wände kann gut gemessen werden. Es ist eine Veränderung mit hoher Genauigkeit und damit eine optimale Einstellung des Querschnitts des Spalts möglich.

Wenn die Wände winklig zueinander angeordnet sind, kann auch ohne diese Ansätze eine Veränderung des Querschnitts des Spalts erreicht werden. Es ist aber selbstverständlich ebenfalls möglich, auch Ansätze auch bei winklig angeordneten Wänden vorzusehen.

Bei einer vorteilhaften Weiterbildung des Verfahrens wird nach der Herstellung der Turbinenschaufel der Querschnitt des Spalts ermittelt und anschließend in Abhängigkeit von vorgebbaren Randbedingungen die Nachbearbeitung vorgenommen. Es kann daher jede einzelne Turbinenschaufel gezielt optimiert werden. Hierdurch läßt sich eine wesentliche Senkung des Bedarfs an Kühlmedium erreichen.

Der Querschnitt kann entweder direkt gemessen werden, beispielsweise mit optischen Verfahren. Alternativ kann eine indirekte Messung dadurch erfolgen, daß der Durchfluß des Kühlmediums durch den Spalt gemessen wird. Es kann ebenfalls die Zuführung des Kühlmediums zu der Turbinenschaufel gemessen werden, die von dem Durchfluß durch den Spalt abhängt. Basierend auf dem gemessenen Durchfluß beziehungsweise der gemessenen Zuführung und dem gewünschten Durchfluß wird anschließend, falls erforderlich, eine Nachbearbeitung durchgeführt. Zur Erhöhung der Genauigkeit kann eine erneute Ermittlung des Querschnitts, gegebenenfalls gefolgt von einer nochmaligen Nachbearbeitung, vorgenommen werden.

Nachstehend wird die Erfindung an Hand von Ausführungsbeispielen näher erläutert, die in schematischer Weise in der Zeichnung dargestellt sind. Für gleiche und funktionsidentische Bauteile werden durchgehend dieselben Bezugszeichen verwendet. Dabei zeigt:
Figur 1 einen schematischen Längsschnitt durch eine Gasturbine;
Figur 2 einen Schnitt durch eine Turbinenleitschaufel;
Figur 3 eine vergrößerte Darstellung der Einzelheit X aus Figur 2;
Figur 4 eine schematische Darstellung eines ersten Ausführungsbeispiels der Herstellung;
Figur 5 unterschiedliche Varianten der Nachbearbeitung der Turbinenschaufel;
Figur 6 eine Ansicht in Pfeilrichtung VI in Figur 5;
Figur 7 ein zweites Ausführungsbeispiel der Herstellung in einer Ansicht ähnlich Figur 4
Figur 8 ein drittes Ausführungsbeispiel der Herstellung in einer Ansicht ähnlich Figur 4;
Figur 9 eine Seitenansicht des Kerns gemäß Figur 8;
Figur 10 eine Ansicht einer Kerngestaltung ähnlich Figur 9;
Figur 11 eine Darstellung eines zweiten Ausführungsbeispiels ähnlich Figur 5;
Figur 12 eine Ansicht in Pfeilrichtung XII in Figur 10; und
Figur 13 ein Flußdiagramm des erfindungsgemäßen Verfahrens.

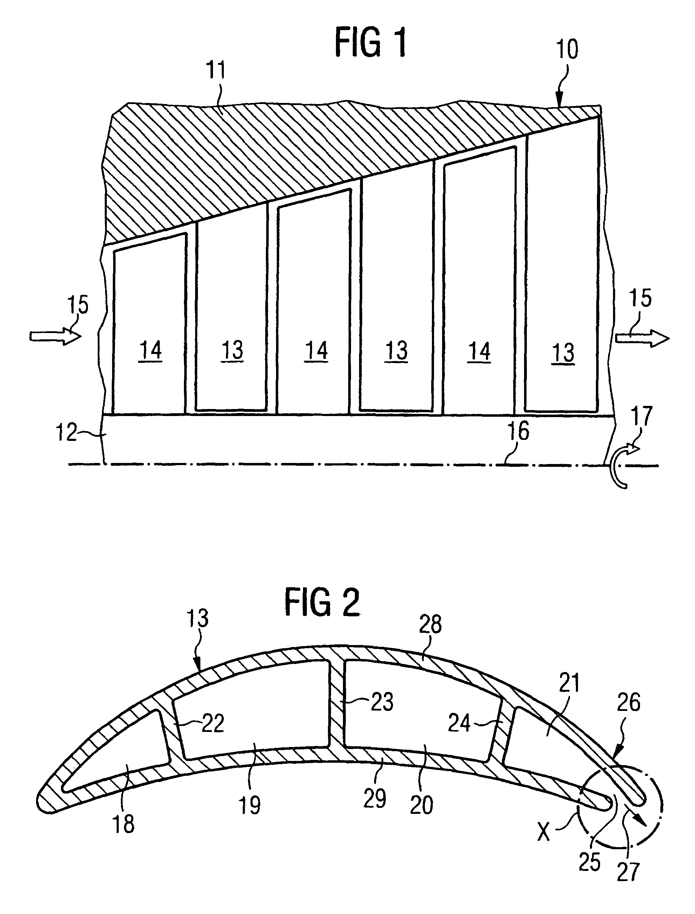

Figur 1 zeigt einen schematischen Längsschnitt durch eine Gasturbine 10 mit einem Gehäuse 11 und einem Rotor 12. Am Gehäuse 11 sind Reihen von Leitschaufeln 13 und am Rotor 12 Reihen von Laufschaufeln 14 vorgesehen. Die Gasturbine 10 wird gemäß Pfeilrichtung 15 von einem Heißgas durchströmt, das den Rotor 12 in eine Drehung um seine Drehachse 16 in Pfeilrichtung 17 versetzt.

Figur 2 zeigt einen Querschnitt durch eine Leitschaufel 13. Die vorliegende Erfindung ist allerdings nicht auf eine Leitschaufel 13 beschränkt, sondern kann auch bei einer Laufschaufel 14 eingesetzt werden.

Die Außenseiten der Leitschaufel 13 werden von einer saugseitigen Wand 28 und einer druckseitigen Wand 29 gebildet. Ein von den Wänden 28, 29 definierter Innenraum ist in insgesamt vier Kammern 18, 19, 20, 21 unterteilt, die über Wände 22, 23, 24 begrenzt sind. Zur Kühlung der Leitschaufel 13 sind die Kammern 18, 19, 20, 21 mit einem Kühlmedium beaufschlagbar. Aus der Kammer 21, die im Bereich einer Hinterkante 26 der Leitschaufel 13 angeordnet ist, tritt das Kühlmedium über einen Spalt 25 in Pfeilrichtung 27 aus.

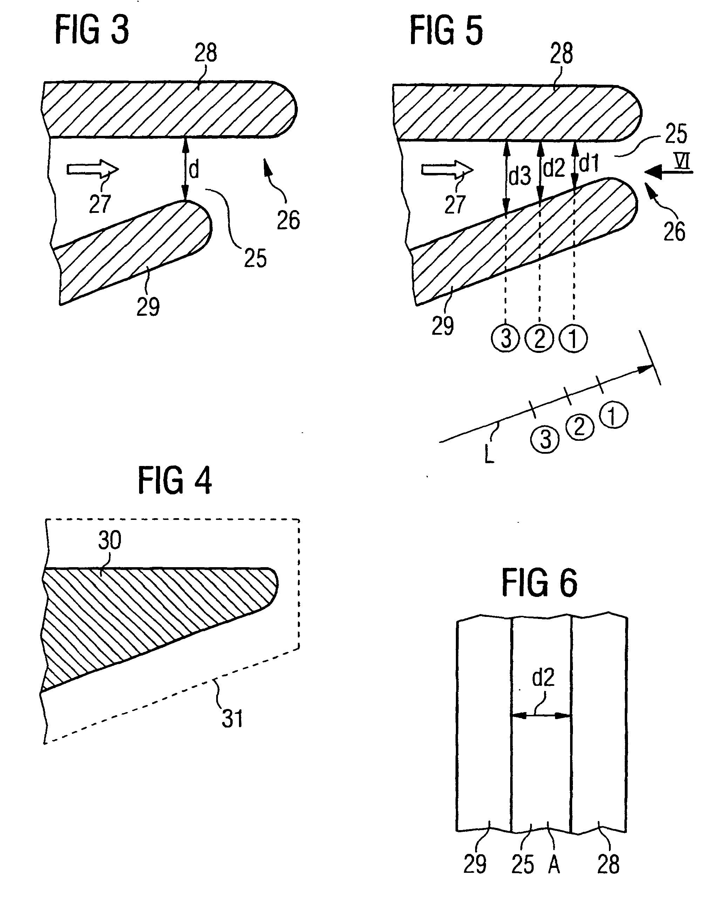

Figur 3 zeigt eine vergrößerte Darstellung der Hinterkante 26 mit dem Spalt 25. Dieser Spalt 25 wird von den Wänden 28, 29 begrenzt und weist eine Dicke d auf. Das Kühlmedium fließt gemäß Pfeilrichtung 27 durch den Spalt 25. Der Durchfluß hängt unter anderem vom Querschnitt des Spalts 25 ab.

Die Figuren 4 und 5 zeigen schematisch ein erstes Ausführungsbeispiel der Herstellung sowie unterschiedliche Varianten der Nachbearbeitung. Gemäß Figur 4 ist ein etwa keilförmiger Kern 30 vorgesehen. Die Form, die zusammen mit dem Kern 30 die Wände 28, 29 ausbildet ist schematisch mit einer Strichlinie 31 angedeutet.

Nach dem Einfüllen des Materials für die Leitschaufel 13, dem Abkühlen und dem Entfernen aus der Form sind zwei Wände 28, 29 vorhanden, die winklig zueinander angeordnet sind. Im dargestellten Ausführungsbeispiel wird anschließend die Wand 29 derart nachbearbeitet, daß ihre Länge L verändert wird. Drei verschiedene Möglichkeiten sind schematisch mit 1, 2, 3 angegebenen. In Abhängigkeit von der Länge L der Wand 29 stellen sich unterschiedliche Dicken d₁, ,d₂, d₃ des Spalts 25 ein. Der Durchfluß des Kühlmediums gemäß Pfeilrichtung 27 durch den Spalt 25 kann somit durch die Nachbearbeitung optimiert und an die jeweiligen Randbedingungen angepaßt werden.

Wie sich aus Figur 6 ergibt, weist der entstehende Spalt 25 durchgehend eine im wesentlichen gleichbleibende Dicke d₂ auf. Es bildet sich ein näherungsweise rechteckförmiger Querschnitt A.

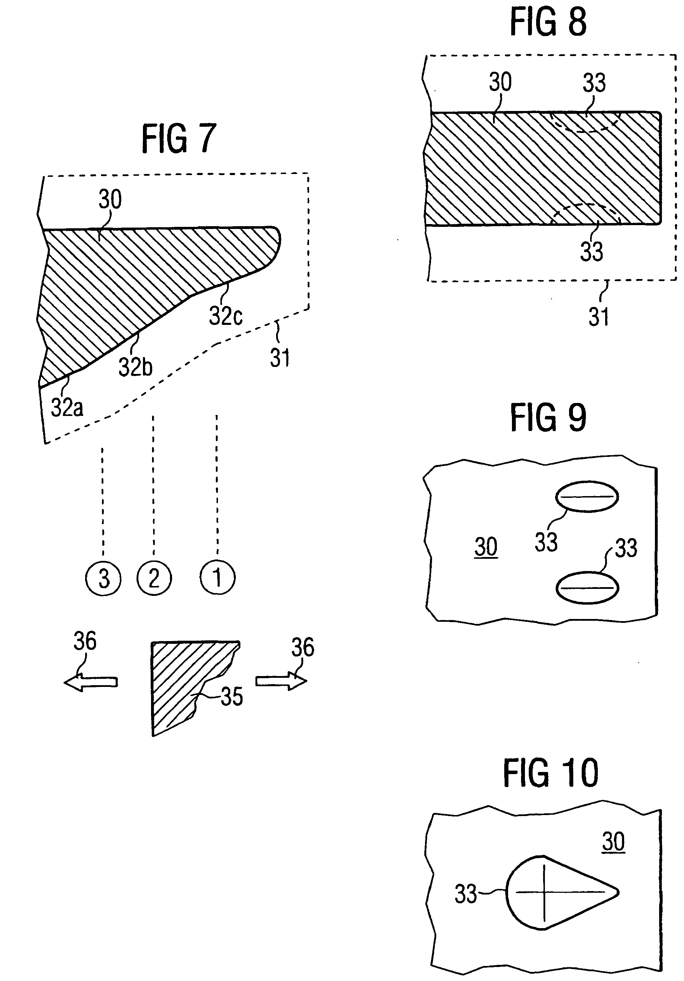

Figur 7 zeigt eine andere Variante unter Verwendung eines Kerns 30 mit mehreren Abschnitten 32a, 32b, 32c. Die Abschnitte 32a, 32c sind parallel zueinander angeordnet, während der Abschnitt 32b winklig steht. In Abhängigkeit von den jeweiligen Randbedingungen wird durch Verschiebung eines Erodierwerkzeugs 35 gemäß Pfeilrichtung 36 die gewünschte Dicke d für den Spalt 25 vorgegeben. Auf Grund der anderen Winkelstellung des Abschnitts 32b, der steiler verläuft als die Abschnitte 32a, 32c, kann eine vergleichsweise große Änderung der Dicke d herbeigeführt werden.

In den Figuren 8 bis 12 ist ein anderes Ausführungsbeispiel der Erfindung dargestellt. Hier wird ein Kern 30 verwendet, der im Bereich der Hinterkante 26 im wesentlichen rechteckig ausgebildet ist. Zur Einstellung des Querschnitts A des Spalts 25 ist der Kern 30 mit Ausnehmungen 33 versehen. Diese Ausnehmungen können wie in Figur 9 dargestellt oval oder gemäß Figur 10 aus einem Halbkreis und einem Dreieck zusammengesetzt sein. Größe, Querschnitt und Abstand dieser Ausnehmungen 33 werden ebenfalls in Abhängigkeit von den Randbedingungen vorgegeben.

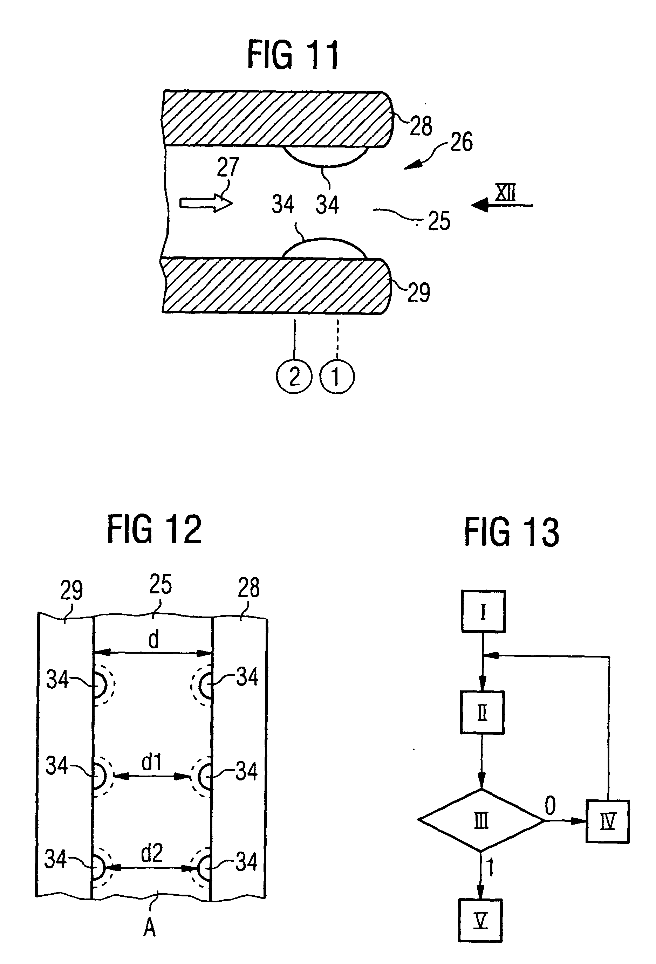

Nach dem Vergießen liegen zueinander parallele Wände 28, 29 vor. Auf Grund der Ausnehmungen 33 sind Innenseiten der Wände 28, 29 mit Ansätzen 34 versehen. In Abhängigkeit vom Ort der Nachbearbeitung verbleibt ein unterschiedlich großer Teil der Ansätze 34. Es liegt dann wiederum ein näherungsweise rechteckiger Querschnitt A des Spalts 25 vor, der lokal durch die Ansätze 34 auf eine Dicke, die mit d₁ beziehungsweise die mit d₂ bezeichnet sind, verengt wird. Der insgesamt für das Durchfließen des Kühlmediums zur Verfügung stehende Querschnitt A kann somit wiederum durch eine Variation der Länge der Länge L der saugseitigen Wand 29 sowie gegebenenfalls der druckseitigen Wand 28 variiert werden. Unterschiedliche Längen L sind wiederum schematisch mit den Ziffern 1, 2 in Figur 11 angedeutet. Figur 2 zeigt schematisch den entstehenden Spalt 25 mit einem stellenweise verengten Querschnitt A.

Figur 13 zeigt ein Flußdiagramm des erfindungsgemäßen Verfahrens. Zunächst wird in Schritt I die Grundform der Turbinenschaufel 13, 14 festgelegt und hergestellt. Nach der Entnahme aus der Form wird in Schritt II der Querschnitt A des Spalts 25 erfaßt. In Schritt III wird geprüft, ob dieser Querschnitt A für die jeweiligen Randbedingungen geeignet ist. Falls dies nicht der Fall ist, erfolgt gemäß Verzweigung 0 in Schritt IV eine Nachbearbeitung, gefolgt von einer nochmaligen Erfassung und Prüfung. Sobald der Querschnitt A geeignet ist, wird gemäß Abzweigung 1 in Schritt V die Nachbearbeitung beendet.

Der Querschnitt A des Spalts 25 kann hierbei direkt gemessen werden, beispielsweise durch geeignete optische Verfahren. Der Durchfluß des Kühlmediums bei den vorgegebenen Randbedingungen wird dann basierend auf physikalischen Grundlagen berechnet. In Abhängigkeit vom Ergebnis der Berechnung wird entschieden, ob eine Nachbearbeitung gemäß Schritt IV erforderlich ist.

Alternativ kann die Turbinenschaufel 13, 14 mit dem Kühlmedium beaufschlagt werden. Es wird dann der Durchfluß des Kühlmediums durch den Spalt 25 beziehungsweise die Zuführung des Kühlmittels zu der Turbinenschaufel 13, 14 gemessen. Das Meßergebnis wird mit den Kühlanforderungen verglichen, die sich aus den Randbedingungen ergeben. In Abhängigkeit von diesem Vergleich wird dann, falls erforderlich, wiederum eine Nachbearbeitung gemäß Schritt IV vorgenommen.

Die vorliegende Erfindung ermöglicht eine Optimierung des Spalts 25 an der Hinterkante 26 der Turbinenschaufel 13, 14. Der Verbrauch an Kühlmedium kann daher minimiert und somit der Gesamtwirkungsgrad gesteigert werden.

## Patentansprüche

1. Verfahren zur Herstellung einer Turbinenschaufel (13, 14), insbesondere für eine Gasturbine (10), die mindestens eine mit einem Kühlmedium beaufschlagbare Kammer (18; 29; 20; 21) sowie an einer Hinterkante (26) einen von zwei Wänden (28, 29) begrenzten Spalt (25) zum Austreten des Kühlmediums aufweist,
**dadurch gekennzeichnet,**
**daß** die Hinterkante (26) der Turbinenschaufel (13; 14) zur Veränderung einer Länge (L) mindestens einer der beiden winklig zueinander angeordneten Wände (28; 29) nachbearbeitet wird, um den Querschnitt (A) des Spalts (25) zu verändern.

2. Verfahren nach Anspruch 1,
**dadurch gekennzeichnet,**
**daß** die druckseitige Wand (29) während der Nachbearbeitung verkürzt wird.

3. Verfahren nach Anspruch 1 oder 2,
**dadurch gekennzeichnet,**
**daß** die mindestens eine Wand (28; 29) in einem Erodierverfahren nachbearbeitet wird.

4. Verfahren nach Anspruch 1, 2 oder 3,
**dadurch gekennzeichnet,**
**daß** nach der Herstellung der Turbinenschaufel (13; 14) der Querschnitt (A) des Spalts (25) ermittelt und anschließend in Abhängigkeit von vorgebbaren Randbedingungen die Nachbearbeitung vorgenommen wird.

5. Verfahren nach Anspruch 4,
**dadurch gekennzeichnet,**
**daß** der Querschnitt (A) direkt gemessen, der Durchfluß des Kühlmediums durch den Spalt (25) oder die Zuführung des Kühlmediums zu der Turbinenschaufel (13; 14) gemessen wird.

## Claims

1. Process for producing a turbine blade or vane (13,14), in particular for a gas turbine (10), which has at least one chamber (18; 29; 20; 21) which can be acted on by a cooling medium and, at a rear edge (26), has a gap (25), which is delimited by two walls (28, 29), for the cooling medium to be discharged, **characterized in that** the rear edge (26) of the turbine blade or vane (13; 14) is remachined so as to change a length (L) of at least one of the two walls (28; 29) which are arranged at an angle to one another, in order to change the cross section (A) of the gap (25).

2. Process according to Claim 1, **characterized in that** the pressure-side wall (29) is shortened during the remachining.

3. Process according to Claims 1 or 2, **characterized in that** the at least one wall (28; 29) is remachined using an erosion process.

4. Process according to Claim 1,2 or 3, **characterized in that**, after the turbine blade or vane (13; 14) has been produced, the cross section (A) of the gap (25) is determined, and then the remachining is carried out as a function of predeterminable boundary conditions.

5. Process according to Claim 4, **characterized in that** the cross section (A) is measured directly, the flow of cooling medium through the gap (25) is measured or the supply of cooling medium to the turbine blade or vane (13; 14) is measured.

## Revendications

1. Procédé de fabrication d'une aube (13, 14) de turbine, notamment pour une turbine (10) à gaz, qui a au moins une chambre (18, 19, 20, 21) pouvant être alimentée en un fluide de refroidissement, ainsi que, sur un bord (26) arrière, un intervalle (25) délimité par deux parois (28, 29) pour la sortie du fluide de refroidissement,
**caractérisé**
**en ce que** le bord (26) arrière de l'aube (13, 14) de la turbine est, pour une modification d'une longueur (L) d'au moins l'une des deux parois (28, 29) faisant un angle entre elles, réusiné pour modifier la section (A) transversale de l'intervalle (25).

2. Procédé suivant la revendication 1, **caractérisé en ce qu'**on raccourcit pendant le réusinage la paroi (29) d'intrados.

3. Procédé suivant la revendication 1 ou 2, **caractérisé en ce qu'**on réusine la au moins une paroi (28, 29) par un procédé d'érosion.

4. Procédé suivant la revendication 1, 2 ou 3, **caractérisé en ce qu'**après la fabrication de l'aube (13, 14) de la turbine, on détermine la section (A) transversale de l'intervalle (25) et on effectue ensuite le réusinage en fonction de conditions aux limites qui peuvent être prescrites.

5. Procédé suivant la revendication 4, **caractérisé en ce que** l'on mesure directement la section (A) transversale, le débit du fluide de refroidissement par l'intervalle (25) ou l'afflux du fluide de refroidissement à l'aube (13, 14) de la turbine.
